# EUROPÄISCHE PATENTSCHRIFT

(11) **EP 1 558 390 B1**
(45) Veröffentlichungstag und Bekanntmachung des Hinweises auf die Patenterteilung: **30.05.2007**
(21) Anmeldenummer: 03775301.9
(22) Anmeldetag: 05.11.2003
(51) Int. Cl.: B01L 3/00, A01N 1/02, G01N 1/42

(54) **VERFAHREN ZUR BESCHICKUNG VON PROBENKAMMERN MIT SUSPENSIONSPROBEN**
METHOD FOR SUPPLYING SAMPLE CHAMBERS WITH SUSPENSION SAMPLES
PROCEDE POUR ACHEMINER DES ECHANTILLONS DE SUSPENSION A DES CHAMBRES A ECHANTILLONS

(30) Priorität: 06.11.2002 DE 10251721
(43) Veröffentlichungstag der Anmeldung: 03.08.2005
(73) Patentinhaber: Fraunhofer-Gesellschaft zur Förderung der angewandten Forschung e.V., 80686 München (DE)
(72) Erfinder: FUHR, Günter, 13187 Berlin (DE); ZIMMERMANN, Heiko, 66113 Saarbrücken (DE); HAGEDORN, Rolf, 13057 Berlin (DE)
(74) Vertreter: Hertz, Oliver
(86) Internationale Anmeldenummer: PCT/EP2003/012357
(87) Internationale Veröffentlichungsnummer: WO 2004/042341

(56) Entgegenhaltungen:
- WO-A-02/46719
- DE-A- 19 720 930
- US-A- 5 873 254
- US-A- 5 925 511

## Beschreibung

Die Erfindung betrifft Verfahren zur Beschickung von Probenkammern mit Suspensionsproben, insbesondere für die Kryokonservierung biologischer Proben, und Vorrichtungen zur Tieftemperaturspeicherung (insbesondere Kryospeicherung, Kryokonservierung) von Suspensionsproben, insbesondere eine Kryospeichervorrichtung für suspendierte biologische Zellen, Zellgruppen oder Zellbestandteile.

Die Kryospeicherung biologischer Proben besitzt zahlreiche Anwendungen, die auf eine andauernde Lagerung der Proben unter Erhaltung von deren Vitalitätszustand gerichtet sind. Die hierzu verwendeten Vorrichtungen sind an die jeweiligen Proben und die Anforderungen bei der Probenhandhabung angepasst. Bei tiefen Temperaturen können beispielsweise in der Transplantationsmedizin Organe oder in der Transfusionsmedizin Blutspenden gelagert werden. Diese Techniken sind auf die Anwendung mit relativ gro-ßen Probenvolumen (ml- bis 1-Bereich) beschränkt.

In der Zellbiologie und zunehmend in der molekularen Biotechnologie besteht jedoch die Aufgabe, kleinste biologische Proben (Einzelzellen, Zellgruppen oder Zellbestandteile) im tiefgefrorenen Zustand zu speichern und ggf. zu bearbeiten. Es ist bekannt, Proben zur Kryokonservierung auf Substratoberflächen abzulegen (siehe z. B. EP 804 073, DE 199 21 236). Diese Technik besitzt den Vorteil, dass Proben in Teilproben portioniert werden können, die später einzeln entnommen werden können. Es ergeben sich jedoch Nachteile wegen des hohen Platzaufwandes der Substrate und der Kontaminationsgefahr.

Alternativ zur Probenablage auf Substraten ist die Verwendung von Kryo-Probenkammern (z. B. in Form von Kapillaren oder dünnwandigen Rohren, siehe z. B. WO 02/46719, US 42 62 494, WO 99/20104) bekannt. Die Probenkammern bilden ein zumindest teilweise abgeschlossenes Behältnis und bieten daher einen verbesserten Schutz für die Proben. Ein genereller Nachteil der Kryo-Probenkammern ist jedoch, dass bei diesen eine reproduzierbare Portionierung in Teilproben ausgeschlossen ist. Eine Portionierung durch mechanische Zerstörung der Probenkammer ist bisher zwangsläufig mit einer Kontaminationsgefahr verbunden. Beispielsweise führt ein Abschneiden von Schlauchabschnitten zu einem Kontakt der Probe mit dem Werkzeug.

Die Aufgabe der Erfindung ist es, verbesserte Verfahren zur Kryospeicherung in Probenkammern bereitzustellen, mit denen die Nachteile herkömmlicher Kryospeichervorrichtungen überwunden werden und die insbesondere kontaminationsfrei eine selektive, teilweise Entnahme von Probenbestandteilen ermöglichen. Eine weitere Aufgabe der Erfindung ist es, verbesserte Kryospeichervorrichtungen bereitzustellen.

Diese Aufgaben werden durch Verfahren und Vorrichtungen mit den Merkmalen gemäß den Patentansprüchen 1 oder 10 gelöst. Vorteilhafte Ausführungsformen und Anwendungen der Erfindung ergeben sich aus den abhängigen Ansprüchen.

Eine Grundidee der Erfindung ist es, die Beschickung einer Probenkammer, insbesondere für die Kryokonservierung biologischer Proben, mit einer Zufuhreinrichtung dahingehend weiterzuentwickeln, dass eine Suspensionsprobe in der Probenkammer in Form von Teilproben abgelegt wird, die durch gasgefüllte Freiräume voneinander getrennt sind. Die Probenkammer besitzt allgemein eine langgestreckte Kanalform, wobei die Querschnittsdimension der Kanalform so gewählt ist, dass die Teilproben unter der Wirkung der Oberflächenspannung und/oder von Kapillarkräften zwischen den Wänden der Probenkammer tropfenförmig abgelegt werden können, ohne dass ein Verlaufen oder Zusammenlaufen von Teilproben erfolgt. Das erfindungsgemäße Verfahren kombiniert die Vorteile der herkömmlichen Substratablage in Bezug auf die Teilbarkeit der Proben mit den Vorteilen von Probenkammern in Bezug auf die Abgeschlossenheit der Proben. Besonders vorteilhaft ist, dass das erfindungsgemäße Beschickungsverfahren ohne besonderen technischen Aufwand mit an sich verfügbaren und üblichen Beschickungstechniken realisierbar ist. Die erfindungsgemäß verwendeten kanalförmigen Probenkammern besitzen durch eine je nach Anwendungsfall relativ groß wählbare Kammerlänge ein großes Fassungsvermögen. Gleichzeitig wird durch die Erfindung die Ablage von separierbaren Teilproben innerhalb des Kammervolumens ermöglicht.

Gemäß einer bevorzugten Ausführungsform der Erfindung umfasst das Beschickungsverfahren eine Schrittfolge, bei der zunächst eine Zufuhreinrichtung in die Probenkammer bis zu einer bestimmten Ausgangsposition eingeführt wird, in der eine erste Teilprobe in der Probenkammer abgelegt wird. Anschließend erfolgt eine Verschiebung der Zufuhreinrichtung oder der ersten Teilprobe zu einer Zwischenposition, wo mit Abstand von der ersten Teilprobe eine weitere Teilprobe abgelegt wird. Dieser Vorgang lässt sich vorteilhafterweise so oft wiederholen, bis die gesamte Probenkammer mit voneinander beabstandeten Teilproben gefüllt ist.

Erfindungsgemäß kann die Zufuhreinrichtung während der Betätigung zur Teilprobenablage in der Probenkammer verschoben werden, durch Einstellung einer bestimmten Geschwindigkeit und/oder Betätigungsdauer kann das Volumen der Teilprobe in definierter Weise festgelegt werden.

Die Freiräume zwischen den Teilproben werden erfindungsgemäß vorzugsweise mit einem Inertgas gefüllt. Daraus können sich Vorteile für die Einhaltung definierter Konservierungsbedingungen und eine erhöhte Haltbarkeit der Proben ergeben.

Ein besonderer Vorteil der Erfindung besteht darin, dass die Beschickung mit verschiedenen verfügbaren Techniken realisiert werden kann. Die Zufuhreinrichtung ist allgemein eine Vorrichtung, mit der unter Ausübung eines bestimmten Druckes (Überdruck- oder Saugkraft) eine Suspensionsprobe aus einem Reservoir in die Probenkammer überführt werden kann. Wenn die Zufuhreinrichtung bspw. wie eine Spritze mit einem Vorratsbehälter aufgebaut ist, von dem unter der Wirkung eines Kolbens die Suspensionsprobe durch einen Schlauch oder eine Spritzennadel abgegeben werden kann, erfolgt vorzugsweise eine Beschickung einer kapillar-, rohr- oder schlauchförmigen Probenkammer. Der Dispenser der Zufuhreinrichtung (Schlauch oder Spritzennadel) besitzt eine Länge, die vorzugsweise gleich der Länge der zu beschickenden Probenkammer ist. Der Dispenser wird an einem Ende der Probenkammer bis zur ersten Ausgangsposition am entgegengesetzten Ende der Probenkammer eingeführt. Anschließend erfolgt eine Rückzugsbewegung des Dispensers, der in vorbestimmten Zeitabständen betätigt wird, so dass an bestimmten Zwischenpositionen die Teilproben und zwischen diesen die gasgefüllten Freiräume gebildet werden.

Bei Verwendung der druckbetätigten Zufuhreinrichtung mit dem Schlauch- oder Nadeldispenser kann die Probenkammer vorteilhafterweise in Kammerbereiche unterteilt sein, die durch Zwischenbereiche voneinander getrennt sind und jeweils einen größeren Querschnittsdurchmesser als die Zwischenbereiche besitzen. In diesem Fall werden die Teilproben in den größeren Kammerbereichen abgelegt. Diese Ausführungsform der Erfindung besitzt den Vorteil, dass die Zwischenbereiche Sollbruchstellen bilden, durch die die Entnahme von Teilproben erleichtert wird.

Gemäß einer alternativen Ausführungsform der Erfindung erfolgt die Probenzufuhr durch ein Ansaugen aus einem Probenreservoir. Die Probenkammer ist bspw. wie eine Hamilton-Spritze aufgebaut, wobei die Zufuhreinrichtung durch das Saugelement der Hamilton-Spritze in Kombination mit einer Stelleinrichtung gebildet wird. Mit der Stelleinrichtung kann die Probenkammer zeitweilig in das Probenreservoir eingetaucht werden. Die Verwendung von Hamilton-Spritzen als Probenkammern besitzt den Vorteil, dass für diese in der Labortechnik Zusatzeinrichtungen z. B. zur Halterung verfügbar sind.

Gemäß einer weiteren Abwandlung kann die Probenkammer mit einem konusförmigen Innenraum aufgebaut sein, der unter der Wirkung eines Unterdruckes beschickt wird. Die konische Form kann Vorteile bei der Halterung der Probenkammer in einem Substrat besitzen.

Ein weiterer Gegenstand der Erfindung ist eine Kryospeichervorrichtung, die mindestens eine Probenkammer und eine Suspensionsprobe aufweist, die in der Probenkammer in Form einer Vielzahl getrennter Teilproben angeordnet ist. Die Teilproben sind durch gasgefüllte Freiräume voneinander getrennt. Die Kryospeichervorrichtung ist vorzugsweise mit einer Datenspeichereinrichtung verbunden.

Weitere Vorteile und Einzelheiten der Erfindung werden aus der folgenden Beschreibung der beigefügten Zeichnungen ersichtlich. Es zeigen:

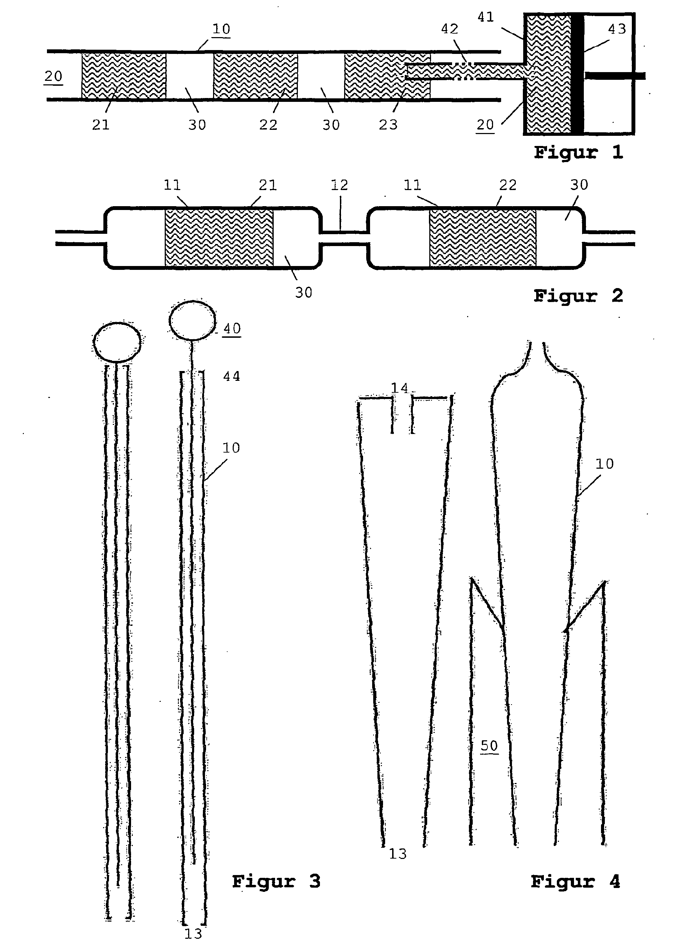

- Fign. 1 bis 4:: verschiedene Ausführungsformen erfindungsgemäßer Kryospeichervorrichtungen in schematischen, vergrößerten Schnittansichten.

In Fig. 1 sind die Prinzipien des erfindungsgemäßen Verfahrens am Beispiel einer schlauchförmigen Probenkammer 10 schematisch illustriert. Die Probenkammer 10 besteht vorzugsweise aus einem flexiblen Schlauch, z. B. aus PE mit einem Innendurchmesser im Bereich von 400 µm bis einige mm und einer anwendungsabhängig gewählten Länge im Bereich von bspw. wenigen Zentimetern bis zu einigen Metern. Die Probenkammer 10 kann als Teil einer Kryospeichervorrichtung aufgespannt oder hängend an einer Halterung angeordnet sein (nicht illustriert). Vor der Beschickung der Probenkammer sind die Schlauchenden zunächst offen.

Beim dargestellten Beispiel ist die Zufuhreinrichtung 40 eine Spritze mit einem Probenreservoir 41, einem Dispenser 42 und einem Stempel 43, mit dem eine Suspensionsprobe 20 aus dem Probenreservoir 41 über den Dispenser 42 in die Probenkammer 10 gegeben wird. Der Dispenser 42 ist ein langgestrecktes, rohrförmiges Bauteil aus einem starren oder flexiblen Material, dessen Außendurchmesser vorzugsweise geringer als der Innendurchmesser der Probenkammer 10 ist. Die Außen- und Innendurchmesser können jeweils auch gleich sein, da kleine Spalte in der Regel einen Druckausgleich bei der Probenbeschickung zulassen. Der Dispenser 42 umfasst bspw. eine Hohlnadel oder ebenfalls einen Schlauch. Die Länge des Dispensers 42 ist gleich der Länge der Probenkammer 10 (aus Übersichtlichkeitsgründen ist nur ein Teil des Dispensers mit einer gestrichelten Linie gezeigt).

Zur Beschickung der Probenkammer 10 wird der Dispenser 42 von einem Ende durch die Probenkammer 10 bis zum anderen Ende in eine Ausgangsposition verschoben. Dort erfolgt eine erste Betätigung des Kolbens 43, so dass eine erste Teilprobe 21 abgelegt wird. Die Zufuhreinrichtung 40 kann bereits während der Betätigung des Stempels 43 zurückgezogen werden. Je nach den Betriebsbedingungen der Zufuhreinrichtung 40 (insbesondere Abgabemenge pro Zeit, Rückzugsgeschwindigkeit) und dem Innendurchmesser der Probenkammer 10 besitzt die Teilprobe 21 ein definiertes Volumen.

Der Innendurchmesser und das Wandmaterial (oder die innere Oberfläche) der Probenkammer 10 sind so gewählt, dass die Teilprobe 21 unter der Wirkung der Oberflächenspannung einen Tropfen bildet, der sich über die gesamte Querschnittsfläche der Probenkammer 10 (senkrecht zur Längsausdehnung) erstreckt und in Längsrichtung der Probenkammer 10 jeweils eine geschlossene stabile Tropfenoberfläche bildet. Die Probenkammer 10 ist durch die Teilprobe 21 in axialer Richtung verschlossen.

Nach der Abgabe der Teilprobe 21 erfolgt ein Rückzug des Dispensers 42 bis zu einer Zwischenposition, an der die Teilprobe 22 abgelegt wird. Die Teilprobe 22 wird so abgelegt, dass sich zwischen den Teilproben 21 und 22 ein Freiraum 30 bildet. Da der Außendurchmesser des Dispensers 42 kleiner als der Innendurchmesser der Probenkammer 10 ist, wird der Freiraum 30 mit einem Gas entsprechend der umgebenden Atmosphäre, z. B. Luft gefüllt. Vorzugsweise wird die Beschickung unter Inertgas (z. B. Stickstoff, Argon) durchgeführt, so dass der Freiraum 30 entsprechend mit dem Inertgas gefüllt ist.

Die Ablage von Teilproben wird wiederholt, bis die Probenkammer 10 befüllt ist. Anschließend können die Enden der Probenkammer 10 bspw. durch Abquetschen, Aufbringen eines Deckels oder Pfrogfens oder Versiegeln geschlossen werden. Anschließend erfolgt die Kryokonservierung durch Überführung in einen Tieftemperaturzustand, wie es an sich von Kryotechniken bekannt ist.

Alternativ kann die Probenkammer 10 gemäß Fig. 1 aus einem Rohr, z. B. einem Kapillarrohr mit einem Innendurchmesser bestehen, der so gering ist, dass eine flüssige Suspensionsprobe unter der Wirkung von Oberflächen- oder Kapillarkräften im Inneren der Probenkammer 10 festgehalten wird. Das Kapillarrohr besteht bspw. aus Glas, einem Halbleitermaterial, Keramik, Metall oder einem anderen inerten Material.

Das Wandmaterial der Probenkammern kann je nach den gewünschten Anforderungen für die Kryospeicherung flüssigkeitsdicht oder permeabel ausgebildet sein. Es kann insbesondere ein ionendurchlässiges Material verwendet werden, wie es von Dialyse-Röhrchen bekannt ist. In das Wandmaterial der Probenkammern oder auf dessen Oberfläche können zusätzlich Sensoren (z. B. Temperatursensoren) vorgesehen sein.

Erfindungsgemäß können mehrere Probenkammern vorgesehen sind, die an ihren Außenwänden miteinander verbunden sind, so dass ein integraler Probenkammerblock, z. B. aus mehreren Schläuchen gebildet wird.

Gemäß einer abgewandelten Ausführungsform der Erfindung kann die Probenkammer gemäß Fig. 2 Kammerbereiche 11 mit einem größeren Durchmesser aufweisen, die durch Zwischenbereiche 12 mit einem geringeren Durchmesser voneinander getrennt sind. Die schematische, vergrößerte Seitenansicht zeigt, dass mit einer Zufuhreinrichtung, bspw. gemäß Fig. 1, Teilproben 21, 22 jeweils in den Kammerbereichen 11 abgelegt werden. Die Freiräume 30 enthalten jeweils die Zwischenbereiche 12. Bei dieser Gestaltung werden durch die Zwischenbereiche 12 vorteilhafterweise Sollbruchstellen gebildet, die eine sichere Entnahme von Teilproben erleichtern.

Die Kammer- und Zwischenbereiche 11, 12 können vorgeformt sein. Die Beschickung der Probenkammer erfolgt in diesem Fall entsprechend den geometrischen Vorgaben durch die Kammerbereiche 11. Gemäß einer abgewandelten, in Bezug auf die Beschickung besonders vorteilhaften Ausführungsform hingegen wird zunächst eine Probenkammer mit einem konstanten Durchmesser gemäß Fig. 1 mit Teilproben beschickt. Nach der Beschickung erfolgt die Verformung, so dass zwischen den Kammerbereichen mit den Teilproben die Zwischenbereiche verminderten Durchmessers gebildet werden.

Die Verformung erfolgt bspw. bei einer schlauchförmigen Probenkammer aus einem thermisch verformbaren Kunststoff mit einer erwärmten Klemmeinrichtung, z. B. einer Pinzettenspitze mit einer Temperatur im Bereich von 60°C bis 100°C. An den Gaspolstern, die durch die Freiräume gebildet werden, wird die Probenkammer thermisch verformt (zusammengedrückt), so dass sich die Kammerbereiche als Segmente bilden. Dieses Verfahren ermöglicht die freie Wahl der Volumina der einzelnen Teilproben. Des Weiteren wird durch das Gaspolster eine thermische Isolierung gebildet, so dass die Teilproben beim Verformen der Probenkammer zur Bildung der Zwischenbereiche nicht erwärmt werden.

Alternativ zur Verwendung eines in die Probenkammer 10 ragenden Dispensers (Figuren 1, 2) kann die Zufuhreinrichtung 40 eine Saugeinrichtung umfassen, mit deren Hilfe die Suspensionsprobe über ein Einlassende der Probenkammer in Teilproben unterteilt eingesaugt wird. Hierzu ist die Saugeinrichtung mit einer Stelleinrichtung ausgestattet, mit der das Einlassende der Probenkammer zeitweilig in ein Probenreservoir getaucht werden kann. Varianten dieser Gestaltung sind ausschnittsweise in den Figuren 3 und 4 illustriert.

Gemäß der in Fig. 3 dargestellten Ausführungsform kann die Probenkammer 10 wie die Spitze einer sogenannten Hamilton-Spritze aufgebaut sein. In der Probenkammer 10 in Form eines geraden Hohlzylinders oder einer Hohlnadel ist ein langgestrecktes Saugelement 44 angeordnet, das sich bis zum Einlassende 13 der Probenkammer 10 erstreckt. Das Saugelement 44 wird beispielsweise wie bei einer Hamilton-Spritze durch einen Draht gebildet, der bei Rückzug (nach oben, rechtes Teilbild von Fig. 3) eine Saugwirkung ausübt. Diese Gestaltung besitzt den Vorteil, dass die Probenkammer 10 entsprechend dem Rückzug des Drahtes definiert mit einem bestimmten Volumen befüllt werden kann. Alternativ kann die Wirkung des Drahtes auch durch eine Pumpeinrichtung erzielt werden. Erfindungsgemäß kann mindestens eine Probenkammer 10 mit einer Datenspeichereinrichtung verbunden sein. Mit dem Saugelement 44 werden jeweils Teilproben mit Abstand voneinander in die Hohlnadel eingesaugt.

Gemäß Fig. 4 wird die Probenkammer 10 mit einer konischen Form gebildet. Die Querschnittsdimension vergrößert sich vom unteren Einlassende 13 hin zum oberen Ende 14. Die konische Innen- und Außenform der Probenkammer 10 wird beispielsweise durch das Ende einer an sich bekannten Pipettenspitze gebildet. Am Auslassende 14 der Probenkammer 10 ist ein Anschlussstück mit einer anwendungsabhängig gewählten Geometrie vorgesehen, mit dem beispielsweise eine Vorrichtung zur Ausübung eines Unterdruckes verbunden werden kann.

Die Ausführungsform gemäß Fig. 4 besitzt den Vorteil, dass die Probe in die Probenkammer 10 aufgenommen werden kann, wie es an sich von Pipetten bekannt ist. Die Probenkammer 10 besitzt beispielsweise eine Länge von rund 2 cm. Sie wird mit einer Kolbeneinrichtung befüllt und in einen Träger oder eine Halterung 50 eingesetzt. Der Träger 50 ist beispielsweise ein Substrat mit angepasst geformten Ausnehmungen, das mit einer Datenspeichereinrichtung verbunden ist, oder eine Halterung, in die Probenkammern 10 wie in einen Reagenzglashalter lose einsetzbar sind. Die erste Variante besitzt den zusätzlichen Vorteil, dass der Träger 50 durch die konische Außenform der Probenkammer 10 gleichzeitig eine Arretierung bildet, die Probenkammer sitzt wie ein Dübel fest im Träger 50.

Die in der vorstehenden Beschreibung, den Ansprüchen und den Zeichnungen offenbarten Merkmale der Erfindung können sowohl einzeln als auch in Kombination für die Verwirklichung der Erfindung in ihren verschiedenen Ausgestaltungen von Bedeutung sein.

## Patentansprüche

**1.** Verfahren zur Beschickung einer Probenkammer (10) mit einer Suspensionsprobe (20), insbesondere für die Kryokonservierung biologischer Proben, bei dem in der Probenkammer (10) eine Positionierung von Teilproben (21, 22, 23, ...) erfolgt, die durch gasgefüllte Freiräume (30) voneinander getrennt sind.

**2.** Verfahren nach Anspruch 1, bei dem die Positionierung die Schritte umfasst:
(a) Einführung einer Zufuhreinrichtung (40) in die Probenkammer (10) bis zu einer vorbestimmten Ausgangsposition,
(b) Betätigung der Zufuhreinrichtung (40) zur Positionierung einer ersten Teilprobe (21) und Verschiebung der Zufuhreinrichtung (40) oder der ersten Teilprobe (21) zu einer vorbestimmten Zwischenposition, so dass der erste Freiraum (30) entsteht,
(c) mindestens einmalige Wiederholung der Betätigung der Zufuhreinrichtung (40) zur Abgabe einer weiteren Teilprobe (22, 23, ...) an der Zwischenposition mit anschließender Verschiebung der Zufuhreinrichtung (40) oder der Teilproben zu einer weiteren Zwischenposition, und
(d) Entfernung der Zufuhreinrichtung (40) aus der Probenkammer (10) nach Positionierung einer letzten Teilprobe.

**2.** Verfahren nach Anspruch 1 oder 2, bei dem die Zufuhreinrichtung (40) während der Betätigung zur Teilprobenabgabe in der Probenkammer (10) verschoben wird.

**3.** Verfahren nach einem der vorhergehenden Ansprüche, bei dem jeder Freiraum (30) zwischen Teilproben mit einem Inertgas gefüllt wird.

**4.** Verfahren nach einem der vorhergehenden Ansprüche, bei dem die Probenkammer (10) kapillar- oder schlauchförmig aufgebaut ist und als Zufuhreinrichtung ein Schlauch oder eine Spritzennadel (42) verwendet wird.

**5.** Verfahren nach Anspruch 4, bei dem die Teilproben in Kammerbereichen (11) der Probenkammer abgelegt werden, die einen größeren Durchmesser als benachbarte Zwischenbereiche (12) besitzen.

**6.** Verfahren nach einem der vorhergehenden Ansprüche 1 bis 3, bei dem die Probenkammer (10) wie eine Hamilton-Spritze aufgebaut ist und die Zufuhreinrichtung (40) ein Saugelement (44) einer Hamilton-Spritze aufweist.

**7.** Verfahren nach einem der vorhergehenden Ansprüche 1 bis 3, bei dem die Probenkammer (10) konusförmig aufgebaut ist und als Zufuhreinrichtung eine Saugeinrichtung verwendet wird.

**8.** Verfahren nach einem der vorhergehenden Ansprüche, bei dem nach der Beschickung eine Überführung der Probenkammer (10) in einen Tieftemperaturzustand durch Positionieren mindestens eines Teils der Probenkammer in einem Kryomedium erfolgt.

**9.** Verfahren gemäß einem der vorhergehenden Ansprüche, bei dem von der Probenkammer (10) im Tieftemperaturzustand mindestens eine Teilprobe durch mechanische Abtrennung abgelöst wird.

**10.** Kryospeichervorrichtung (100), die mindestens eine Probenkammer (10) und eine Suspensionsprobe (20) aufweist, die in der Probenkammer (10) in Form von Teilproben angeordnet ist, die durch gasgefüllte Freiräume (30) voneinander getrennt sind.

**11.** Kryospeichervorrichtung nach Anspruch 10, bei der die Probenkammer die Form eines Hohlzylinders, Hohlkonus, Rohres, Schlauches, Kanals oder einer Hohlnadel besitzt.

**12.** Kryospeichervorrichtung nach Anspruch 10, bei der die Probenkammer (10) die Form einer Hamilton-Spritze besitzt.

**13.** Kryospeichervorrichtung nach Anspruch 10, bei der die Probenkammer (10) die Kammerbereiche (11) aufweist, die durch Zwischenbereiche (12) voneinander getrennt sind und einen größeren Durchmesser als die Zwischenbereiche aufweisen, wobei die Teilproben in den Kammerbereichen (11) angeordnet sind.

**14.** Kryospeichervorrichtung nach einem der vorhergehenden Ansprüche 10 bis 13, bei der die Probenkammer (10) aus einem flexiblen Material besteht.

**15.** Kryospeichervorrichtung nach einem der vorhergehenden Ansprüche 10 bis 14, bei der die Probenkammer (10) mit mindestens einem Sensor, insbesondere einem Temperatursensor, und/oder Kühlflächen ausgestattet ist.

**16.** Kryospeichervorrichtung nach einem der vorhergehenden Ansprüche 10 bis 15, bei der mehrere Probenkammern (10) vorgesehen sind, die an ihren Außenwänden miteinander verbunden sind, so dass ein integraler Probenkammerblock gebildet wird.

## Claims

**1.** Method for supplying a sample chamber (10) with a suspension sample (20), in particular for cryopreservation of biological samples, in which positioning of divided samples (21, 22, 23, ...) is effected in the sample chamber (10), which divided samples are separated from each other by gas-filled free spaces (30).

**2.** Method according to claim 1, in which the positioning comprises the steps:
(a) introduction of a supply device (40) into the sample chamber (10) up to a predetermined initial position,
(b) operation of the supply device (40) for positioning a first divided sample (21) and displacing the supply device (40) or the first divided sample (21) to a predetermined intermediate position so that the first free space (30) is produced,
(c) at least a single repetition of the operation of the supply device (40) to deposit a further divided sample (22, 23, ...) at the intermediate position with subsequent displacement of the supply device (40) or of the divided samples to a further intermediate position, and
(d) removal of the supply device (40) from the sample chamber (10) after positioning of a last divided sample.

**2.** Method according to claim 1 or 2, in which the supply device (40) is displaced during operation of the divided sample deposit in the sample chamber (10).

**3.** Method according to one of the preceding claims, in which each free space (30) between divided samples is filled with an inert gas.

**4.** Method according to one of the preceding claims, in which the sample chamber (10) has a capillary or hose-like construction and a hose or a syringe needle (42) is used as supply device.

**5.** Method according to claim 4, in which the divided samples are deposited in chamber regions (11) of the sample chamber which have a greater diameter than adjacent intermediate regions (12).

**6.** Method according to one of the preceding claims 1 to 3, in which the sample chamber (10) is constructed like a Hamilton syringe and the supply device (40) has a suction element (44) of a Hamilton syringe.

**7.** Method according to one of the preceding claims 1 to 3, in which the sample chamber (10) has a conical construction and a suction device is used as supply device.

**8.** Method according to one of the preceding claims, in which, after supply, transfer of the sample chamber (10) into a low temperature state is effected by positioning at least a part of the sample chamber in a cryomedium.

**9.** Method according to one of the preceding claims, in which at least one divided sample is released from the sample chamber (10) in the low temperature state by mechanical separation.

**10.** Cryostorage device (100) which has at least one sample chamber (10) and a suspension sample (20) which is disposed in the sample chamber (10) in the form of divided samples which are separated from each other by gas-filled free spaces (30).

**11.** Cryostorage device according to claim 10, in which the sample chamber has the form of a hollow cylinder, hollow cone, pipe, hose, channel or a hollow needle.

**12.** Cryostorage device according to claim 10, in which the sample chamber (10) has the form of a Hamilton syringe.

**13.** Cryostorage device according to claim 10, in which the sample chamber (10) has chamber regions (11) which are separated from each other by intermediate regions (12) and have a greater diameter than the intermediate regions, the divided samples being disposed in the chamber regions (11).

**14.** Cryostorage device according to one of the preceding claims 10 to 13, in which the sample chamber (10) comprises a flexible material.

**15.** Cryostorage device according to one of the preceding claims 10 to 14, in which the sample chamber (10) is equipped with at least one sensor, in particular a temperature sensor, and/or cooling surfaces.

**16.** Cryostorage device according to one of the preceding claims 10 to 15, in which a plurality of sample chambers (10) is provided, which are connected to each other at their outer walls so that an integral sample chamber block is formed.

## Revendications

**1.** Procédé de versement d'un échantillon de suspension (20) dans une chambre d'échantillonnage (10), notamment pour la cryoconservation d'échantillons biologiques, dans lequel un positionnement d'échantillons divisés (21, 22, 23, ...), qui sont séparés les uns des autres par des espaces libres (30) remplis de gaz, s'effectue dans la chambre d'échantillonnage (10).

**2.** Procédé selon la revendication 1, dans lequel le positionnement comporte les étapes :
(a) d'introduction d'un système d'alimentation (40) dans la chambre d'échantillonnage (10) jusqu'à une position de départ prédéfinie,
(b) d'actionnement du système d'alimentation (40) afin de positionner un premier échantillon partiel (21) et de déplacer le système d'alimentation (40) ou le premier échantillon divisé (21) en direction d'une position intermédiaire prédéfinie, de sorte que cela crée le premier espace libre (30)
(c) de répétition au moins une seule fois de l'actionnement du système d'alimentation (40) afin de distribuer un autre échantillon divisé (22, 23, ...) au niveau de la position intermédiaire par le déplacement annexé du système d'alimentation (40) ou des échantillons divisés en direction d'une autre position intermédiaire, et
(d) retrait du système d'alimentation (40) de la chambre d'échantillonnage (10) après avoir positionné un dernier échantillon divisé.

**2.** Procédé selon la revendication 1 ou 2, dans lequel le système d'alimentation (40) est déplacé dans la chambre d'échantillonnage (10) pendant l'actionnement de la distribution des échantillons divisés.

**3.** Procédé selon l'une quelconque des revendications précédentes, dans lequel chaque espace libre (30) entre les échantillons divisés est rempli d'un gaz inerte.

**4.** Procédé selon l'une quelconque des revendications précédentes, dans lequel la chambre d'échantillonnage (10) présente une structure capillaire ou tubulaire et un tuyau ou une aiguille d'injection (42) est utilisé(e) comme système d'alimentation.

**5.** Procédé selon la revendication 4, dans lequel les échantillons divisés sont stockés dans les zones de chambre (11) de la chambre d'échantillonnage qui possèdent un plus grand diamètre que les zones intermédiaires (12) voisines.

**6.** Procédé selon l'une quelconque des revendications 1 à 3, dans lequel la chambre d'échantillonnage (10) présente la structure d'une aiguille Hamilton et le système d'alimentation (40) comprend un élément d'aspiration (44) d'une aiguille Hamilton.

**7.** Procédé selon l'une quelconque des revendications 1 à 3, dans lequel la chambre d'échantillonnage (10) présente une structure en forme de cône et un système d'aspiration est utilisé comme système d'alimentation.

**8.** Procédé selon l'une quelconque des revendications précédentes, dans lequel après le versement, il s'effectue un transfert de la chambre d'échantillonnage (10) à un état de basse température en positionnant au moins une partie de la chambre d'échantillonnage dans un milieu cryogène.

**9.** Procédé selon l'une quelconque des revendications précédentes, dans lequel au moins un échantillon divisé est dissout par séparation mécanique depuis la chambre d'échantillonnage (10) dans l'état de basse température.

**10.** Dispositif de stockage cryogénique (100) qui comprend au moins une chambre d'échantillonnage (10) et un échantillon de suspension (20), qui est disposé dans la chambre d'échantillonnage (10) sous forme d'échantillons divisés, qui sont séparés les uns des autres par des espaces libres (30) remplis de gaz.

**11.** Dispositif de stockage cryogénique selon la revendication 10, dans lequel la chambre d'échantillonnage possède la forme d'un cylindre creux, d'un cône creux, d'un tube, d'un tuyau, d'un canal ou d'une aiguille creuse.

**12.** Dispositif de stockage cryogénique selon la revendication 10, dans lequel la chambre d'échantillonnage (10) possède la forme d'une aiguille Hamilton.

**13.** Dispositif de stockage cryogénique selon la revendication 10, dans lequel la chambre d'échantillonnage (10) comprend des zones de chambre (11) qui sont séparées les unes des autres par des zones intermédiaires (12) et comprennent un plus grand diamètre que les zones intermédiaires, les échantillons divisés étant disposés dans les zones de chambre (11).

**14.** Dispositif de stockage cryogénique selon l'une quelconque des revendications 10 à 13, dans lequel la chambre d'échantillonnage (10) est constituée d'un matériau flexible.

**15.** Dispositif de stockage cryogénique selon l'une quelconque des revendications 10 à 14, dans lequel la chambre d'échantillonnage (10) est équipée d'au moins un capteur, notamment d'un capteur de température, et/ou de surfaces de refroidissement.

**16.** Dispositif de stockage cryogénique selon l'une quelconque des revendications 10 à 15, dans lequel plusieurs chambres d'échantillonnage (10) sont prévues, qui sont reliées les unes aux autres au niveau de leurs parois extérieures, de sorte qu'un bloc de chambre d'échantillonnage intégral soit formé.
